Europäisches Patentamt

European Patent Office

Office européen des brevets

(11) Veröffentlichungsnummer: **0 497 166 A1**

# EUROPÄISCHE PATENTANMELDUNG

(21) Anmeldenummer: **92100782.9**

(22) Anmeldetag: **18.01.92**

(51) Int. Cl.5: **A01C 17/00**, A01C 15/00

(30) Priorität: **31.01.91 DE 4102783**

(43) Veröffentlichungstag der Anmeldung:
**05.08.92 Patentblatt 92/32**

(84) Benannte Vertragsstaaten:
**DE FR GB**

(71) Anmelder: **Amazonen-Werke H. Dreyer GmbH
& Co. KG
Am Amazonenwerk 9-13
W-4507 Hasbergen-Gaste(DE)**

(72) Erfinder: **Dreyer, Heinz, Dr. Dipl.-Ing
Am Amazonenwerk 7
W-4507 Hasbergen(DE)**

(54) Schleuderdüngerstreuer.

(57) Schleuderdüngerstreuer mit zumindest zwei Vorratsbehältern für die getrennte Mitführung von zumindest zwei verschiedenen Düngersorten, wobei jedem Vorratsbehälter jeweils zumindest zwei eigene Dosierorgane und zumindest zwei eigene Verteilorgane (beispielsweise rotierende Schleuderscheiben mit Wurfschaufeln) zugeordnet sind, wobei das jeweilige Dosierorgan dem ihm zugeordneten Verteilorgan den auszubringenden Dünger in einstellbarer Weise zuleitet, wobei die verschiedenen Düngersorten von jeweils verschiedenen Verteilorganen verteilt werden. Um auf einfache Weise eine gleichmäßige Verteilung der verschiedenen Düngersorten, bei deren gleichzeitigen Ausbringen zu gewährleisten, ist vorgesehen, daß die die verschiedenen Düngersorten verteilenden Verteilorgane (37,38,41) in unterschiedlichen Höhen zueinander angeordnet sind.

FIG. 4

Die Erfindung betrifft einen Schleuderdüngerstreuer gemäß des Oberbegriffes des Patentanspruches 1.

Ein derartiger Schleuderdüngerstreuer wird in der deutschen Offenlegungsschrift 36 17 302 beschrieben.

Gemäß den Ausführungen dieser Offenlegungsschrift in Spalte 7, Zeilen 37 bis 54 besteht der Vorratsbehälter des Schleuderdüngerstreuers aus zumindest zwei einzelnen Vorratsbehältern für unterschiedliche Düngersorten, wobei den einzelnen Vorratsbehältern jeweils einstellbare Dosierorgane zugeordnet sind, und daß die aus den einzelnen Vorratsbehältern herausrieselnden unterschiedlichen Düngermitteln jeweils einem Verteilorgan zugeführt werden. Hierdurch soll dem Boden entsprechend des erforderlichen Nährstoffbedarfs ein auf die Nährstoffversorgung des Bodens abgestimmtes Mengenverhältnis über die einzelnen Dosierorgane dem jeweiligen Verteilorgan und somit dem Boden zugeführt werden.

Nachteilig ist bei diesem Schleuderdüngerstreuer, daß die Abstände zwischen den einzelnen Dosierorganen und den Schleuderscheiben unterschiedlich groß sind. Hierdurch können sich, insbesondere bei Schräglage des Schleuderdüngerstreuers nachteilige Streubildveränderungen und somit eine ungleichmäßige Bedüngung ergeben.

Der Erfindung liegt die Aufgabe zugrunde, auf einfache Weise eine gleichmäßige Verteilung der verschiedenen Düngersorten, bei deren gleichzeitigen Ausbringen zu gewährleisten.

Diese Aufgabe wird erfindungsgemäß dadurch gelöst, daß die die verschiedenen Düngersorten verteilenden Verteilorgane in unterschiedlichen Höhen zueinander angeordnet sind. Infolge dieser Maßnahmen können sich die Streufächer der unterschiedlichen Düngersorten ungestört ausbilden und sich nicht gegenseitig stören. Es sind also quasi zwei Düngerstreuwerke in unterschiedlichen Höhen zueinander vorgesehen, so daß jede Düngersorte von einem eigenen Streuwerk verteilt wird. Hierdurch ergibt sich der äußerst große Vorteil, daß praktisch die bestehenden Serienstreuwerke von Schleuderdüngerstreuern aus Großserien verwendet werden können, wobei zum Ausbringen jeder Düngersorte ein eigenes Streuwerk verwendet wird. Weiterhin ist es so in vorteilhafter Weise möglich, jedes Streuwerk optimal auf die auszubringenden Düngersorte abzustimmen, so daß jede Düngersorte unabhängig von der anderen in gleichmäßiger Weise verteilt werden kann. Hierbei ist zu berücksichtigen, daß jede Düngersorte in den meisten Fällen eine eigene Einstellung des Streuwerkes erforderlich macht, um ein gleichmäßiges Streubild und somit eine gleichmäßige Düngerverteilung zu gewährleisten.

Eine äußerst vorteilhafte Zuordnung von Dosierorganen und Verteilorganen ergibt sich dadurch, daß die Dosierorgane ebenfalls in unterschiedlichen Höhen zueinander und jeweils zumindest annähernd im gleichen Abstand zu ihren jeweiligen Verteilorganen angeordnet sind. Somit ist in jedem Falle unter allen Einsatzbedingungen eine gleichmäßige Verteilung des auszubringenden Düngers gewährleistet.

Eine äußerst schmal quer zur Fahrtrichtung bauenden Düngerstreuer ergibt sich dadurch, daß die für die verschiedenen Düngersorten vorgesehenen Vorratsbehälter in Fahrtrichtung gesehen hintereinander angeordnet sind, und daß die in zwei unterschiedlichen Höhenebenen angeordneten Dosierorgane und Verteilorgane ebenfalls entsprechend der Fahrtrichtung hintereinander angeordnet sind.

In einer anderen Ausführungsform ist erfindungsgemäß vorgesehen, daß ein mittlerer Vorratsbehälter mit zwei ihm zugeordneten Dosierorganen und Verteilorganen vorgesehen ist, und daß jeweils seitlich zu dem mittleren Vorratsbehälter angeordnete weitere Vorratsbehälter mit diesem zugeordneten Dosierorgan und Verteilorgan vorgesehen sind. Infolge dieser Maßnahmen ergibt sich eine sehr günstige Schwerpunktlage sehr dicht zu dem den Schleuderdüngerstreuer tragenden Schlepper.

Eine vorteilhafte Anordnung von Dosier- und Verteilorganen ergibt sich bei dieser Bauart von Schleuderdüngerstreuern, daß die dem seitlichen Vorratsbehälter zugeordnete Dosierorgan und Verteilorgan höher als die dem mittleren Vorratsbehälter zugeordneten Dosier- und Verteilorgan angeordnet sind.

Weitere Einzelheiten der Erfindung sind den übrigen Unteransprüchen, der Beispielsbeschreibung und den Zeichnungen zu entnehmen. Hierbei zeigen

Fig. 1 einen erfindungsgemäßen Schleuderdüngerstreuer in der Ansicht von hinten und in Prinzipdarstellung,

Fig. 2 den Schleuderdüngerstreuer gemäß Fig. 1 in der Seitenansicht und in Prinzipdarstellung,

Fig. 3 die von den Schleuderscheiben des Schleuderdüngerstreuers gemäß den Fig. 1 und 2 erzeugten Streufächer in der Draufsicht und in Prinzipdarstellung,

Fig. 4 einen weiteren Schleuderdüngerstreuer in der Ansicht von hinten und in Prinzipdarstellung,

Fig. 5 den Schleuderdüngerstreuer gemäß Fig. 4 in der Seitenansicht und in Prinzipdarstellung,

Fig. 6 die von dem Streuwerk gemäß dem Schleuderstreuer der Fig. 4 und 5 erzeugten Streufächer in der Draufsicht und in Prinzipdarstellung und

Fig. 7 weitere von dem Streuwerk gemäß dem Schleuderstreuer der Fig. 4 und 5 erzeugten Streufächer in der Draufsicht und in Prinzipdarstellung.

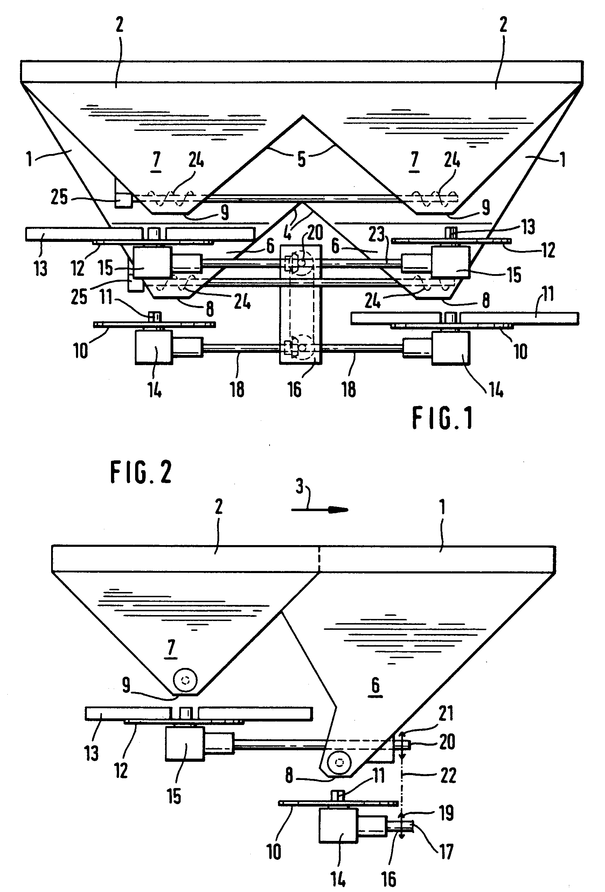

Der Schleuderdüngerstreuer gemäß den Fig. 1 und 2 weist die beiden Vorratsbehälter 1 und 2 für die getrennte Mitführung von zwei verschiedenen Düngersorten auf. Die beiden Vorratsbehälter 1 und 2 für die verschiedenen Düngersorten sind in Fahrtrichtung 3 gesehen hintereinander angeordnet. Jeder Vorratsbehälter 1 und 2 ist durch ein dachförmiges Mittelteil 4 bzw. 5 in seinem unteren Bereich jeweils in die Trichterspitzen 6 bzw. 7 aufgeteilt. Jedem Vorratsbehälter sind zwei eigene Dosierorgane 8 bzw. 9 zugeordnet. Diese Dosierorgane sind in bekannter und daher nicht näher dargestellter Weise als in Bodenplatten angeordnete Auslauföffnungen mit darunter angeordneten Schiebern ausgebildet. Unter jedem Dosierorgan 8 bzw. 9 sind die als Schleuderscheiben 10 mit Wurfelementen 11 bzw. die als Schleuderscheibe 12 mit Wurfelementen 13 ausgebildete Verteilerorgane angeordnet. Jedes Dosierorgan 9 bzw. 8 leitet in einstellbarer Weise den Dünger diesen Verteilerorganen zu. Die Wurfelemente 11 und 13 sind auf den Schleuderscheiben in ihrem Winkel zur Radialen einstellbar angeordnet.

Die Verteilorgane 10 sind in einer anderen Höhe als die Schleuderscheiben 12 angeordnet. Hierbei sind die vorderen Schleuderscheiben 10 tiefer als die hinteren Schleuderscheiben 12 angeordnet. Ebenfalls sind die Dosierorgane 8 in einer anderen Höhe als die Schleuderscheiben 9 angeordnet. Hierbei sind jedoch die Dosierorgane 8 bzw. 9 in einem gleichen Abstand zu den ihnen jeweils zugeordneten Schleuderscheiben 10 bzw. 12 jeweils angeordnet.

Die Schleuderscheiben 10 bzw. 12 sind jeweils auf Getriebeausgangswellen der Getriebe 14 und 15 angeordnet. In der Mitte zwischen den beiden Getrieben 14 ist das Eingangsgetriebe 16 angeordnet. Über die Getriebeeingangswelle 17 und den Antriebsstrang 18 werden die Schleuderscheiben 10 rotierend angetrieben. Auf der Eingangswelle 17 ist das Kettenrad 19 angeordnet. Das mittlere Getriebe 16 weist eine obere Eingangswelle 20 auf. Auf dieser Eingangswelle 20 ist das Kettenrad 21 angeordnet. Über den Kettentrieb 22 stehen die Zahnräder 19 und 21 in Antriebsverbindung, so daß über den Antriebsstrang 23 die Schleuderscheiben 12 rotierend angetrieben werden. Desweiteren ist in dem unteren Bereich der Trichter 6 und 7 oberhalb der Dosierorgane 8 und 9 jeweils ein auf einer Rührwelle befindliches Rührorgan 24 angeordnet. Dieses Rührorgan 24 wird jeweils über einen Hydraulikmotor 25 angetrieben.

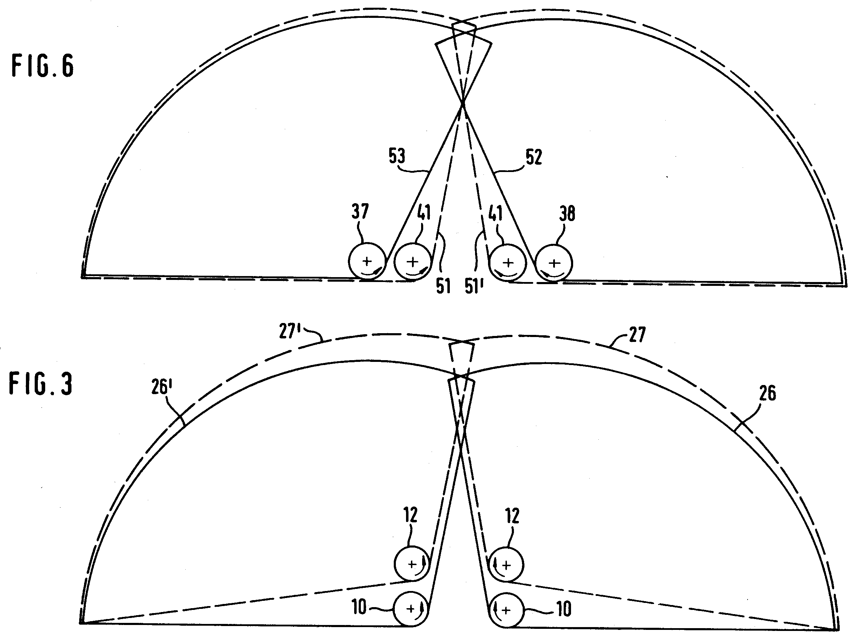

Die Schleuderscheiben 10 und 12 verteilen den von den Dosierorganen 8 und 9 zudosierten Dünger entsprechend den in Fig. 3 dargestellten Streufächern 26, 26', 27 und 27'. Hierbei kann die genaue Verteilung des Düngers über die im einzelnen nicht dargestellte, jedoch bekannte Möglichkeit der Winkeleinstellbarkeit der Wurfschaufeln 11 und 13 auf den Schleuderscheiben 10 und 12 je nach auszubringender Düngersorte eingestellt werden. Da die Schleuderscheiben 10 und 12 für die verschiedenen Düngersorten in den unterschiedlichen Ebenen angeordnet sind, können sich die Streufächer 26 und 26' der einen Düngersorte von den Streufächern 27 und 27' der anderen Düngersorte ungehindert ausbilden. Aufgrund der winkeleinstellbaren Wurfschaufeln 11 und 13 können die Streubilder entsprechend den Anfordernissen jeder auszubringenden Düngersorte unabhängig voneinander eingestellt werden, so daß in jedem Falle eine gleichmäßige Verteilung des Düngers erreicht wird. Weiterhin ist es möglich, unterschiedliche Düngermengen jeder Schleuderscheibe zuzuführen, so daß entsprechend der Nährstoffversorgung des Bodens die Düngersorten entsprechend den Nährstoffversorgungsverhältnissen angepaßt ausgebracht werden kann. So kann beispielsweise jedes Dosierorgan jeder Schleuderscheibe eine andere Menge Dünger zuführen. Hierbei kann die Einstellung der Dosierorgane über eine elektronische Dosiereinrichtung, in welche die gesamte Nährstoffversorgung der zu bestreuenden Fläche eingespeichert ist, automatisch gesteuert werden. Es ist jedoch auch eine Steuerung von Hand möglich.

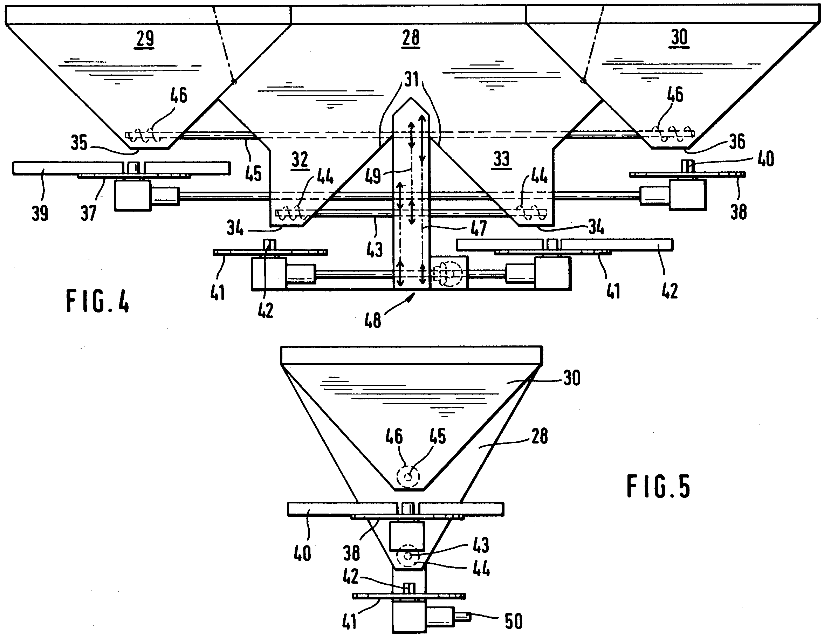

Der Schleuderdüngerstreuer gemäß den Fig. 4 und 5 weist die drei Vorratsbehälter 28, 29 und 30 auf. Der mittlere Vorratsbehälter 28 ist durch das dachförmige Mittelteil 28 in seinem unteren Bereich in die beiden Trichterspitzen 32 und 33 aufgeteilt. An dem mittleren Vorratsbhälter 28 sind seitlich jeweils die beiden Vorratsbehälter 29 und 30 angeordnet. Den Trichterspitzen 32 und 33 des mittleren Vorratsbehälters sind die Dosierorgane 34, die als in den Bodenplatten angeordneten Auslauföffnungen mit Schiebern in bekannter und daher nicht näher dargestellter Weise ausgebildet sind, zugeordnet. Den beiden seitlichen Vorratsbehältern 29 und 30 sind die Dosierorgane 35 und 36, die ebenfalls als in den Bodenplatten angeordnete Auslauföffnungen mit darunter angeordneten Schiebern in bekannter und daher nicht näher dargestellter Weise ausgebildet sind, zugeordnet. Das Fassungsvermögen der beiden seitlichen Vorratsbehälter 29 und 30 ist kleiner als das Fassungsvermögen des Vorratsbehälters 28.

Die Dosierorgane 34 des mittleren Vorratsbehälters 28 sind tiefer angeordnet wie die Dosierorgane 35 und 36 der beiden seitlichen Vorratsbehälter 29. Ebenfalls sind die den Vorratsbehältern 29 und 30 zugeordneten und als Schleuderscheiben 37 mit winkeleinstellbaren Wurfschaufeln 38 bzw. als Schleuderscheiben 38 mit winkeleinstellbaren Wurfschaufeln 40 ausgebildeten Verteilorgane höher angeordnet als die als Schleuerscheiben 41 mit winkeleinstellbaren Wurfschaufeln 42 ausgebildeten Verteilorgane, welche dem Vorratsbhälter 28 zugeordnet sind. Die jeweiligen Verteilorgane sind jeweils im etwa gleichen Abstand zu ihren Dosierorganen angeordnet.

In dem unteren Bereich des Vorratsbehälters 28 ist die horizontale Rührwelle 43 mit dem Rührorgan 44 und in den Vorratsbehältern 29 und 30 ist die horizontale Rührwelle 45 mit den Rührorganen 46 angeordnet.

Die zwei in einem Abstand zueinander angeordneten horizontalen Rührwellen 43 und 45 sind von einem ersten Kettentrieb 47 antreibbar, der die obere Rührwelle 45 von Hauptantrieb 48 aus antreibt. Die untere Rührwelle 42 wird über einen zweiten Kettentrieb 49 mit der oberen Rührwelle 45 angetrieben. Die Getriebeeingangswelle 50 wird über eine Gelenkwelle von der Zapfwelle des den Schleuderdüngerstreuer ziehenden Schlepper rotierend angetrieben. Über den im einzelnen nicht näher erläuterten Antriebsstrang sind somit die Schleuderscheiben 41, 37 und 38 rotierend antreibbar.

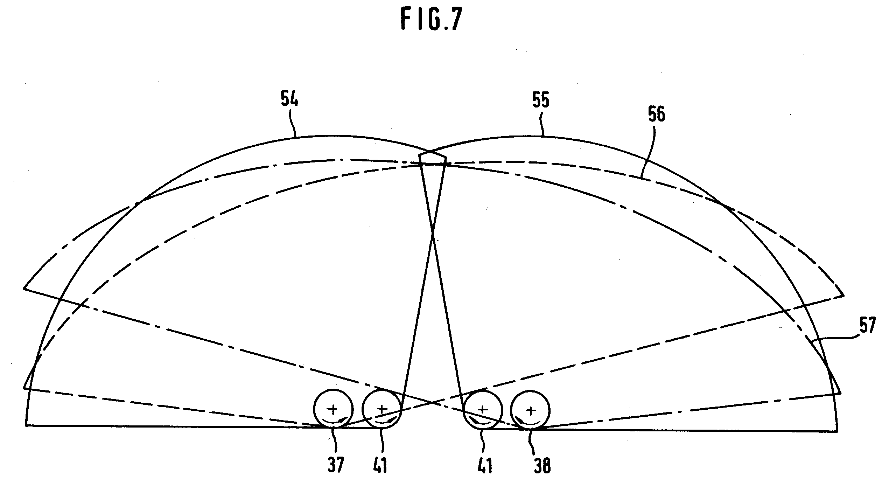

Die Schleuderscheiben 37,38 und 41 verteilen die von dem Dosierorgan 35,36 und 34 zudosierten Dünger entsprechend den in Fig. 6 dargestellten Streufächern 51 und 51', 52 und 53 auf der Bodenoberfläche. Hierbei kann die genaue Verteilung des Düngers über die im einzelnen nicht dargestellte, jedoch bekannte Möglichkeit der Winkelverstellbarkeit der Wurfschaufeln 39, 40 und 42 auf den Schleuderscheiben je nach auszubringender Düngersorte eingestellt werden. Da die Schleuderscheibe 37, 38 und 41 für die verchiedenen Düngersorten in den unterschiedlichen Ebenen angeordnet sind, können sich die Streufächer der einen Düngersorte ungehindert von den Streufächern der anderen Düngersorte ausbilden. Die Dosierorgane 35,36 und 34 können unabhängig voneinander eingestellt werden, so daß unterschiedliche Düngermengen jeder Schleuderscheibe zugeführt werden können, so daß entsprechend der Nährstoffversorgung des Bodens die Düngersorten entsprechend den Nährstoffversorgungsverhältnissen angepaßt ausgebracht werden können.

Hierbei ist vorgesehen, daß der Schleuderdüngerstreuer gemäß den Fig. 4 und 5 sowohl für die Ausbringung von zwei verschiedenen Düngersorten wie auch für die Ausbringung von drei verchiedenen Düngersorten eingesetzt werden kann. Bei der Ausbringung von zwei verschiedenen Düngersorten wird die eine Düngersorte in den Vorratsbehälter 28 eingefüllt, während in die beiden seitlichen Vorratsbehälter 29 und 30 die andere Düngersorte eingefüllt werden kann. Der Dünger wird dann entsprechend den in Fig. 6 dargestellten Streufächern ausgebracht und verteilt.

Wenn jedoch mit dem Schleuderdüngerstreuer gemäß den Fig. 4 und 5 drei verschiedene Düngersorten ausgebracht werden sollen, so wird in jedem der Vorratsbehälter 28,29 und 30 eine andere Düngersorte eingefüllt. Die Düngersorten werden dann entsprechend den in Fig. 7 dargestellten Streufächern ausgebracht. Hierbei wird die Grunddüngersorte von den beiden mittleren Schleuderscheiben 41 entsprechend der beiden Streufächer 54 und 55 ausgebracht. Der in dem Vorratsbehälter 29 befindliche Dünger wird von der Schleuderscheibe 37 entsprechend des Streufächers 56 verteilt. Der sich im Vorratsbehälter 30 befindliche Dünger wird von der Schleuderscheibe 38 entsprechend des Streufächers 57 über der Bodenoberfläche verteilt ausgebracht.

**Patentansprüche**

1. Schleuderdüngerstreuer mit zumindest zwei Vorratsbehältern für die getrennte Mitführung von zumindest zwei verschiedenen Düngersorten, wobei jedem Vorratsbehälter jeweils zumindest zwei eigene Dosierorgane und zumindest zwei eigene Verteilorgane (beispielsweise rotierende Schleuderscheiben mit Wurfschaufeln) zugeordnet sind, wobei das jeweilige Dosierorgan dem ihm zugeordneten Verteilorgan den auszubringenden Dünger in einstellbarer Weise zuleitet, wobei die verschiedenen Düngersorten von jeweils verschiedenen Verteilorganen verteilt werden, dadurch gekennzeichnet, daß die die verschiedenen Düngersorten verteilenden Verteilorgane (10,12,37,38,41) in unterschiedlichen Höhen zueinander angeordnet sind.

2. Schleuderdüngerstreuer nach Anspruch 1, dadurch gekennzeichnet, daß die Dosierorgane (8,9,34,35,36) ebenfalls in unterschiedlichen Höhen zueinander und jeweils zumindest annähernd im gleichen Abstand zu ihrem jeweiligen Verteilorganen (10,12,37,38,41) angeordnet sind.

3. Schleuderdüngerstreuer nach einem oder mehreren der vorstehenden Ansprüche, dadurch gekennzeichnet, daß die für die verschiedenen Düngersorten vorgesehenen Vorratsbehälter (1,2) in Fahrtrichtung (3) gesehen hintereinander angeordnet sind, daß die in zwei unterschiedlichen Höhenebenen angeordneten Dosierorgane (8,9) und Verteilorgane (10,12) ebenfalls entspechend in Fahrtrichtung (3) hintereinander angeordnet sind.

**4.** Schleuderdüngerstreuer nach einem oder mehreren der vorstehenden Ansprüche, dadurch gekennzeichnet, daß ein mittlerer Vorratsbehälter (28) mit zwei ihm zugeordneten Dosierorganen (34) und Verteilorganen (41) vorgesehen ist, daß jeweils seitlich zu dem mittleren Vorratsbehälter (28) angeordnete weitere Vorratsbehälter (29,30) mit diesen zugeordneten Dosierorganen (35,36) und Verteilorganen (37,38) vorgesehen sind.

**5.** Schleuderdüngerstreuer nach Anspruch 4, dadurch gekennzeichnet, daß die den seitlichen Vorratsbehältern (29,30) zugeordneten Dosierorgane (35,36) und Verteilorgane (37,38) höher als die die dem mittleren Vorratsbehälter (29) zugeordneten Dosierorgane (34) und Verteilorgane (41) angeordnet sind.

**6.** Schleuderdüngerstreuer nach einem oder mehreren der vorstehenden Ansprüche, dadurch gekennzeichnet, daß die Verteilorgane (10,12,37,38,41) über einen gemeinsamen Getriebeantriebsstrang antreibbar sind.

**7.** Schleuderdüngerstreuer nach einem oder mehreren der vorstehenden Ansprüche, dadurch gekennzeichnet, daß die Verteilorgane mittels Hydraulikmotoren antreibbar sind.

**8.** Schleuderdüngerstreuer nach einem oder mehreren der vorstehenden Ansprüche, dadurch gekennzeichnet, daß das Fassungsvolumen in den verschiedenen Vorratsbehältern untereinander variierbar ist.

**9.** Schleuderdüngerstreuer nach einem oder mehreren der vorstehenden Ansprüche, dadurch gekennzeichnet, daß zwei in einem Abstand zueinander angeordnete horizontale Rührwellen (43,45) vorgesehen sind, daß die Rührwellen (43,45) von einem Kettentrieb antreibbar sind, wobei über einen ersten Kettentrieb (47) die obere Rührwelle (45) vom Hauptantrieb und die untere Rührwelle (43) von einem zweiten Kettentrieb (49) von der oberen Rührwelle (45) antreibbar ist.

**10.** Schleuderdüngerstreuer nach einem oder mehreren der vorstehenden Ansprüche, dadurch gekennzeichnet, daß auf den Schleuderscheiben in Scheibenebene winkelverschwenkbare Wurfschaufeln vorgesehen sind, welche anhand von Skalen in ihrer Winkeleinstellung einstellbar sind.

FIG.1

FIG.2

EP 0 497 166 A1

FIG.6

FIG.3

7

FIG.4

FIG.5

EP 0 497 166 A1

FIG.7

EP 0 497 166 A1

Europäisches
Patentamt

Nummer der Anmeldung

# EUROPÄISCHER RECHERCHENBERICHT

EP    92 10 0782

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-2 285 319 (LENFANTIN) <br> * Seite 1, Zeile 25 - Seite 8; Abbildungen 1-8 * <br> --- | 1-3,7 | A01C17/00 <br> A01C15/00 |
| Y <br> A | FR-A-2 061 686 (VAN DER LELY) <br> * Seite 2, Zeile 37 - Seite 11; Abbildungen 1-10 * <br> --- | 1 <br> 2,3,6,8 | |
| Y <br> A | FR-A-1 092 631 (LEA) <br> * das ganze Dokument * <br> --- | 1 <br> 6,9 | |
| X,D | DE-A-3 617 302 (AMAZONEN-WERKE) <br><br> * Spalte 7, Zeile 37 - Spalte 11, Zeile 21; Abbildungen 1-15 * <br> --- | 1,4,6, 10: | |
| Y | US-A-2 684 785 (WALDORF) <br> * Spalte 2, Zeile 37 - Spalte 6, Zeile 44; Abbildungen 1-9 * <br> --- | 1 | |
| Y <br> A | DE-A-1 966 232 (VAN DER LELY) <br> * Seite 2, Absatz 6 - Seite 4; Abbildungen 1-3 * <br> --- | 1 <br> 2,3,6,9 | RECHERCHIERTE SACHGEBIETE (Int. Cl.5 ) |
| A | US-A-3 073 606 (HURT) <br> --- | | A01C |
| A | DE-U-8 911 839 (GMEINER) <br><br> ----- | | |

Der vorliegende Recherchenbericht wurde für alle Patentansprüche erstellt

| Recherchenort | Abschlußdatum der Recherche | Prüfer |
|---|---|---|
| DEN HAAG | 14 MAI 1992 | VERMANDER R.H. |